Europäisches Patentamt

European Patent Office

Office européen des brevets

(11) Numéro de publication: **0 429 350 B1**

(12) **FASCICULE DE BREVET EUROPEEN**

(45) Date de publication de fascicule du brevet: **28.12.94**  (51) Int. Cl.⁵: **B60N 2/04**

(21) Numéro de dépôt: **90403260.4**

(22) Date de dépôt: **19.11.90**

(54) **Perfectionnements aux sièges avant des véhicules automobiles.**

(30) Priorité: **22.11.89 FR 8915334**

(43) Date de publication de la demande:
**29.05.91 Bulletin 91/22**

(45) Mention de la délivrance du brevet:
**28.12.94 Bulletin 94/52**

(84) Etats contractants désignés:
**AT BE CH DE DK ES GB GR IT LI LU NL SE**

(56) Documents cités:
**DE-A- 2 810 577**
**FR-A- 2 169 970**
**FR-A- 2 193 368**
**GB-A- 1 168 927**
**GB-A- 2 070 920**

(73) Titulaire: **BERTRAND FAURE AUTOMOBILE "B.F.A."**
**Parc d'Activités du Moulin de Massy,**
**23 à 29, rue du Saule Trapu**
**F-91300 Massy (FR)**

(72) Inventeur: **Courtois, Bernard**
**26, rue des Chênes**
**F-91150 Morigny-Champigny (FR)**

(74) Mandataire: **Behaghel, Pierre et al**
**CABINET PLASSERAUD**
**84 rue d'Amsterdam**
**F-75009 Paris (FR)**

## Description

L'invention est relative aux sièges avant des véhicules automobiles et plus particulièrement, mais non exclusivement, à ceux destinés aux conducteurs de ces véhicules.

Il convient que ces sièges remplissent simultanément un certain nombre de conditions et en particulier les suivantes, qui sont définies pour un siège de conducteur à titre illustratif :

- soutien correct du conducteur tout au long du dos, de l'arrière-train et des cuisses jusqu'aux extrémités antérieures de celles-ci,
- pose naturelle des mains du conducteur sur le volant sans que ses bras soient exagérément tendus ou pliés,
- pose naturelle de la pointe d'au moins l'un de ses pieds sur une pédale de commande lorsque le talon correspondant repose sur le plancher du véhicule,
- localisation des yeux du conducteur à un niveau suffisant pour qu'il puisse voir devant le véhicule une portion de la chaussée relativement proche.

Dans la pratique, cette dernière condition est définie comme suit : les yeux du conducteur ne doivent pas se trouver au-dessous du plan tangent à la surface supérieure du capot du véhicule et passant par la base de la portion, du pare-brise, située devant le conducteur, ledit plan étant considéré comme définissant la "ligne du vue" correcte du conducteur.

Il n'est bien entendu pas possible que, dans un véhicule donné, un même siège remplisse sans réglage la totalité de ces conditions pour la totalité des morphologies des conducteurs et conductrices.

On rappelle à cet égard qu'en Europe 5 % environ des personnes en âge de conduire un véhicule ont une taille inférieure à 1 m 60 et que 5 % de ces personnes environ ont une taille supérieure à 1 m 90.

C'est pourquoi, dans les modes de réalisation actuellement proposés pour les sièges avant des véhicules automobiles, de nombreux mécanismes de réglage sont prévus pour ajuster respectivement la hauteur de l'assise, son inclinaison, sa position longitudinale dans le véhicule, l'inclinaison du dossier, la hauteur de l'appui-tête, etc.

Ces mécanismes sont coûteux et l'expérience montre que leur réglage global est si délicat que la plupart des conducteurs ne les utilisent pas de la manière optimum et se contentent d'un confort imparfait.

Dans la plupart des cas en outre, certains réglages ne sont pas prévus du tout.

C'est ainsi que la longueur de l'assise est calculée de façon telle que les personnes ayant les jambes les plus courtes puissent avoir le dos correctement appliqué contre le dossier du siège sans nécessiter le recours à un coussin intermédiaire : il en résulte bien entendu qu'une telle assise est beaucoup trop courte pour soutenir correctement les avant-cuisses des personnes à jambes longues, ce qui peut provoquer des douleurs dans ces jambes lors des longs trajets.

Pour remédier à cet inconvénient, il a déjà été proposé de faire comprendre à l'assise une portion arrière et une portion avant montées de façon coulissante l'une sur l'autre selon la direction longitudinale des sièges, et un mécanisme de réglage dés positions relatives de ces deux portions, actionnable par un organe de commande accessible de l'usager assis sur le siège (voir document GB-A-2 070 920, correspondant au préambule de la revendication indépendante).

Ce perfectionnement est intéressant, mais les réglages de longueur de l'assise qu'il rend possibles doivent impérativement être complétés par des réglages de la même assise en position longitudinale et en hauteur, ce qui peut être long, fastidieux et aléatoire.

L'invention a pour but, surtout, de rendre automatiques ces différents réglages à partir d'une commande unique.

A cet effet, l'assise du siège selon l'invention comprend une portion arrière et une portion avant montées de façon coulissante l'une sur l'autre selon la direction longitudinale du siège, et un mécanisme de réglage de leurs positions relatives actionnable par un organe de commande, et ledit siège est caractérisé en ce que ledit organe de commande est unique, en ce que la portion arrière et la portion avant sont montées pivotantes respectivement autour de deux axes horizontaux transversaux portés par l'embase de siège et en ce que le mécanisme de réglage est propre à modifier à la fois la position longitudinale de l'axe avant, la position longitudinale de l'axe arrière et la hauteur de cet axe arrière de façon telle que tout recul de la portion avant corresponde à un allongement de l'assise et à un abaissement de sa portion arrière, et inversement.

Dans des modes de réalisation préférés, on a recours en outre à l'une et/ou à l'autre des dispositions suivantes :

- le mécanisme de réglage est agencé de façon telle que l'axe arrière puisse se déplacer le long d'un premier chemin fixe rectiligne ou sensiblement rectiligne, légèrement incliné sur l'horizontale et descendant vers l'arrière et que l'axe avant puisse se déplacer le long d'un second chemin fixe rectiligne ou sensiblement rectiligne et horizontal ou sensiblement horizontal, avec un rapport fixe R compris entre 1,5 et 2,5 entre les courses de déplacement de ces deux axes.,

- l'anglé formé entre les deux chemins est compris entre 10 et 30°,
- l'axe arrière est lié à un écrou coopérant avec une première vis liée à l'embase du siège et s'étendant selon le premier chemin fixe, l'axe avant est lié à un écrou coopérant avec une seconde vis liée à l'embase du siège et s'étendant selon le second chemin fixe et les rotations de la première vis sont liées à celles de la seconde de façon telle que le rapport entre les courses de déplacement des deux écrous le long de leurs vis soit égal à R,
- le rapport entre les pas des deux vis est égal à R et les rotations de ces vis sont synchronisées par coopération de deux engrenages tronconiques solidaires respectivement de celles-ci,
- les deux axes sur lesquels sont montées pivotantes respectivement les portions arrière et avant de l'assise sont portés par les extrémités supérieures de deux bielles rigides dont la première est plus inclinée sur la verticale que la seconde et dont les deux extrémités inférieures sont montées pivotantes autour de deux axes horizontaux transversaux fixes de l'embase du siège, et les deux bielles sont réunies entre elles par une entretoise rigide montée pivotante sur elles autour d'un cinquième axe et d'un sixième axe horizontaux transversaux, le cinquième axe, lié à la bielle arrière, étant relativement proche de l'extrémité inférieure de cette bielle alors que le sixième axe, lié à la bielle avant, est relativement proche de l'extrémité supérieure de cette bielle,
- dans un siège selon l'alinéa précédent, le montage pivotant du premier axe sur la bielle arrière est prévu de façon à rendre possible un coulissement de cet axe parallèlement à lui-même le long de cette bielle, ledit axe est lui-même monté de façon à pouvoir coulisser parallèlement à lui-même le long d'un guide fixe incliné sur l'horizontale et définissant le premier chemin ci-dessus, et l'organe de commande unique est agencé de façon à régler la position de cet axe le long de son guide,
- la portion haute du dossier, comprenant l'appui-tête, est montée verticalement coulissante dans la portion basse de ce dossier et le mécanisme de réglage est agencé de façon telle que sa commande unique modifie en outre le niveau de ladite portion haute du dossier dans un sens ascendant lors de l'allongement de l'assise et inversement,
- le déplacement vertical de la portion haute du dossier est obtenu par rotation d'une vis sans fin montée rotative dans le dossier et liée axialement à ce dossier, vis coopérant avec un écrou solidaire de ladite portion haute, ladite vis étant synchronisée avec une autre vis sans fin montée rotative dans la portion arrière de l'assise et liée axialement à celle-ci, vis coopérant de façon réversible avec un écrou solidaire de la portion avant de l'assise,
- un levier coudé est monté pivotant autour d'un septième axe horizontal transversal lié à la portion arrière de l'assise, l'extrémité de l'un des bras de ce levier est attelée par une biellette sensiblement horizontale à la portion avant de l'assise de l'extrémité de l'autre bras dudit levier est attelée par une biellette sensiblement verticale à la portion haute du dossier,
- le vide dégagé par l'écartement relatif des deux portions constitutives de l'assise ou du dossier est obturé extérieurement par un voile souple qui est tendu en permanence vers l'intérieur du siège par des moyens élastiques appropriés.

L'invention comprend, mises à part ces dispositions principales, certaines autres dispositions qui s'utilisent de préférence ce même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, montre schématiquement la portion avant d'un habitacle de véhicule faisant apparaître les deux positions extrêmes occupées par un siège établi selon l'invention, l'une de ces deux positions, ou position arrière et basse, représentée en traits continus, correspondant à l'assise d'un conducteur de grande taille alors que l'autre, en position avancée et relevée, correspond à l'assise d'une conductrice de petite taille.

La figure 2 montre très schématiquement un tel siège ainsi que les réglages qui peuvent lui être appliqués conformément à l'invention.

La figure 3 montre une vue de côté d'un soubassement de siège conforme à l'invention.

Les figures 4 et 5 montrent schématiquement, mais d'une manière un peu plus précise que la figure 2, un autre siège établi selon l'invention, en respectivement sa position correspondant à l'assise d'une personne d'une petite taille et en sa position correspondant à l'assise d'une personne de taille moyenne.

Les figures 6 et 7 montrent respectivement en vue en plan et coupe verticale longitudinale selon VII-VII figure 6, le coussin d'une assise de siège conforme à l'invention.

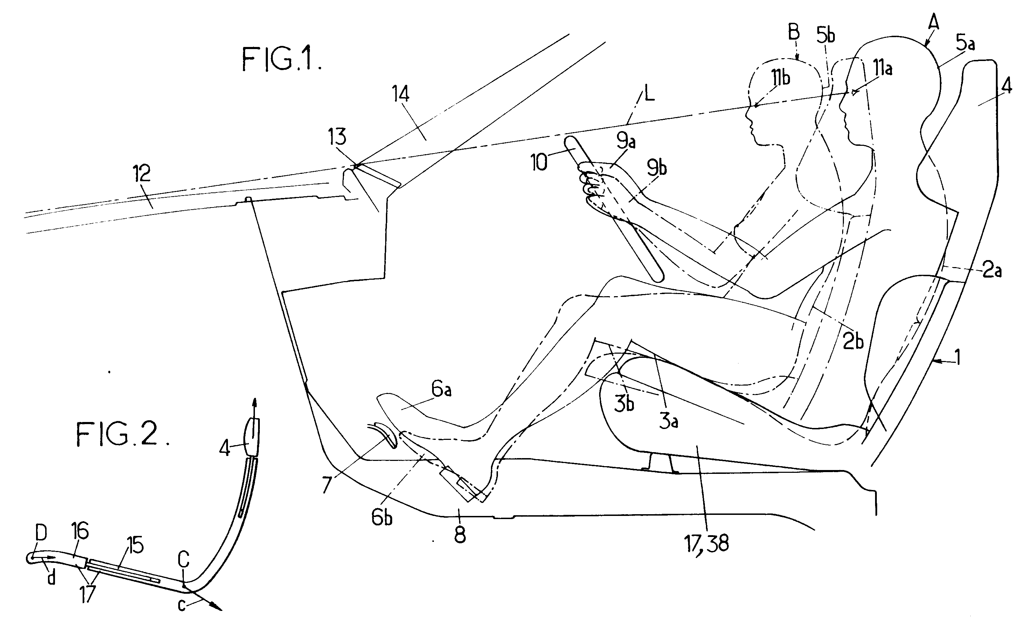

Comme exposé plus haut, on se propose d'établir un siège avant 1 de véhicule (figure 1) réglable de façon à supporter aussi bien un conducteur A de grande taille (représenté en traits pleins) qu'une conductrice B de petite taille (représentée en traits mixtes), ce support remplissant à la fois chacune des conditions suivantes :

- soutien optimal de l'usager du siège aussi bien au niveau de son dos 2a, 2b que de ses cuisses 3a, 3b, avec, dans chaque cas, disposition de la portion supérieure 4 du dossier, constituant l'appui-tête, à une faible distance horizontale en arrière de la nuque 5a, 5b de l'usager,
- appui aisé de la pointe du pied 6a, 6b de l'usager sur au moins une pédale de commande 7 du véhicule, lorsque le talon correspondant repose sur le plancher 8 du véhicule,
- repos naturel des mains 9a, 9b de l'usager sur le volant 10,
- et disposition des yeux 11a, 11b de l'usager au moins au niveau de la ligne de vue correcte L définie comme étant tangente au capot 12 du véhicule et passant par la base 13 du pare-brise 14.

A cet effet, et comme bien visible sur la figure 1, on prévoit des moyens pour assurer les réglages suivants, à partir de la position du siège correspondant au support de la conductrice B de petite taille :

- recul important et léger abaissement du fond du siège,
- recul moindre du bord avant de l'assise, ce qui correspond à un allongement de cette assise,
- et de préférence élévation de la portion supérieure du dossier.

Plus précisément, ces moyens sont agencés de façon telle que, à partir de la position ci-dessus correspondant à un usager de petite taille, l'actionnement d'un organe de commande unique par cet usager assis sur le siège se traduise essentiellement par les deux effets suivants :

- déplacement d'un point arrière C lié à l'ossature de l'assise vers l'arrière et vers le bas le long d'un chemin $c$ sensiblement rectiligne et légèrement descendant, sur une longueur $m$,
- et déplacement d'un point avant D lié à l'ossature de l'assise vers l'arrière le long d'un chemin $d$ sensiblement rectiligne et horizontal, sur une longueur égale à $m/R$, R étant un nombre compris entre 1,5 et 2,5 et de préférence égal à 2.

Ces deux déplacements sont considérés en valeur absolue.

Ils se traduisent par un allongement relatif de l'assise de longueur $m - \frac{m}{R}$ , ce qui impose un montage coulissant mutuel entre les deux portions arrière 15 et avant 16 de cette assise 17 : en définitive on observe un déplacement relatif de la portion avant 16 de l'assise vers l'avant, par rapport à la portion arrière 15, selon une course égale à $m - \frac{m}{R}$ .

On observe également un abaissement de la portion arrière 15.

En outre, dans les modes de réalisation préférés, on assure simultanément, lors de chaque recul d'amplitude m du point arrière C de l'assise, une élévation d'amplitude sensiblement identique m de la portion supérieure 4 du dossier.

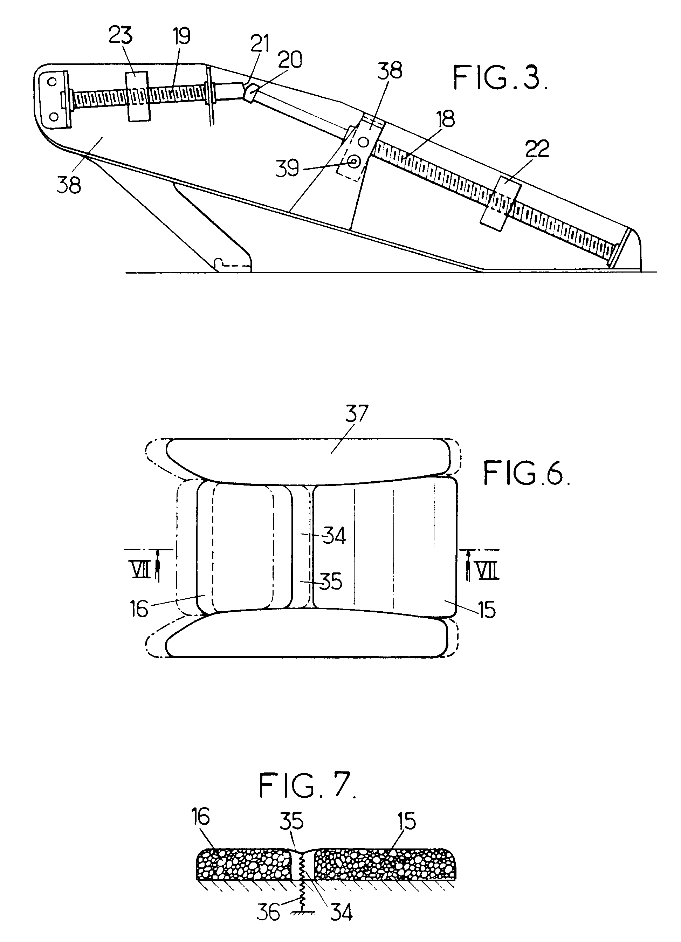

Dans le mode de réalisation illustré sur la figure 3, les deux trajectoires $c$ légèrement inclinée et $d$ horizontale affectées respectivement aux deux points C et D de l'assise sont matérialisées par deux vis 18, 19 qui sont toutes les deux montées rotatives sur la même embase 38.

Ces deux vis sont ici liées angulairement entre elles par coopération de deux pignons tronconiques 20,21 qui sont solidaires de leurs prolongements respectifs, mais leur liaison angulaire mutuelle pourrait être réalisée de toute autre manière désirable, par exemple à l'aide d'un flexible.

Les points C et D sont par exemple des axes liés aux deux portions d'assise 15 et 16 considérées, axes montés pivotants sur deux écrous 22 et 23 coopérant respectivement avec les deux vis 18 et 19.

Le rapport entre les pas de ces deux vis est égal à R.

Selon une variante, on utilise deux vis de pas identiques, avec interposition d'un train réducteur de rapport R entre ces deux vis.

Ces modes de réalisation à vis se prêtent particulièrement bien à une commande par moteur électrique.

C'est ce qui a été supposé sur la figure 3 où le rectangle 38 désigne un réducteur équipé d'une cage à billes propre à encaisser les efforts axiaux exercés vers le bas et vers l'arrière par le poids de l'usager sur la vis inclinée 18 au niveau de l'écrou 22.

La référence 39 désigne l'arrivée du couple moteur, c'est-à-dire le raccordement du réducteur 38 avec un flexible résistant à la torsion lui-même entraîné en rotation par un moteur à axe transversal situé sous l'assise.

La rotation de la vis 18 peut être prélevée de toute manière appropriée et transmise intégralement à une autre vis (non représentée) montée dans le dossier et coopérant avec un écrou lui-même lié verticalement, mais non angulairement, à la portion haute 4 dudit dossier, laquelle est alors montée verticalement coulissante dans le dossier.

Cette dernière liaison est assurée de façon telle que la portion haute du dossier s'élève automatiquement lorsque l'assise du siège s'allonge et inversement.

Dans un mode de réalisation avantageux, les coulissements relatifs de la portion avant 16 de l'assise par rapport à sa portion arrière 15 sont exploités de façon à faire tourner une vis sans fin longitudinale liée axialement, mais non en rotation, à ladite portion arrière : il suffit à cet effet de choisir pour ladite vis un pas rendant possible la commande réversible de cette vis et de faire coopérer avec celle-ci un écrou ou doigt solidaire de la portion avant de l'assise.

Ce sont alors avantageusement les rotations de cette vis qui sont transformées en rotation d'une seconde vis sans fin montée rotative dans le dossier, mais liée axialement à celui-ci et coopérant avec un écrou ou doigt solidaire de la portion haute de ce dossier, le rapport entre les pas et/ou déplacements angulaires des deux vis sans fin considérées étant choisi de préférence de façon telle que le déplacement relatif de la portion haute du dossier par rapport au dossier lui-même soit de l'ordre du déplacement horizontal absolu de la portion arrière 15 de l'assise et non pas du déplacement relatif de cette portion arrière par rapport à sa portion avant.

Cette solution présente l'avantage que les deux vis sans fin considérées sont montées sur la même ossature rigide, ce qui simplifie leur synchronisation mutuelle, notamment par flexible.

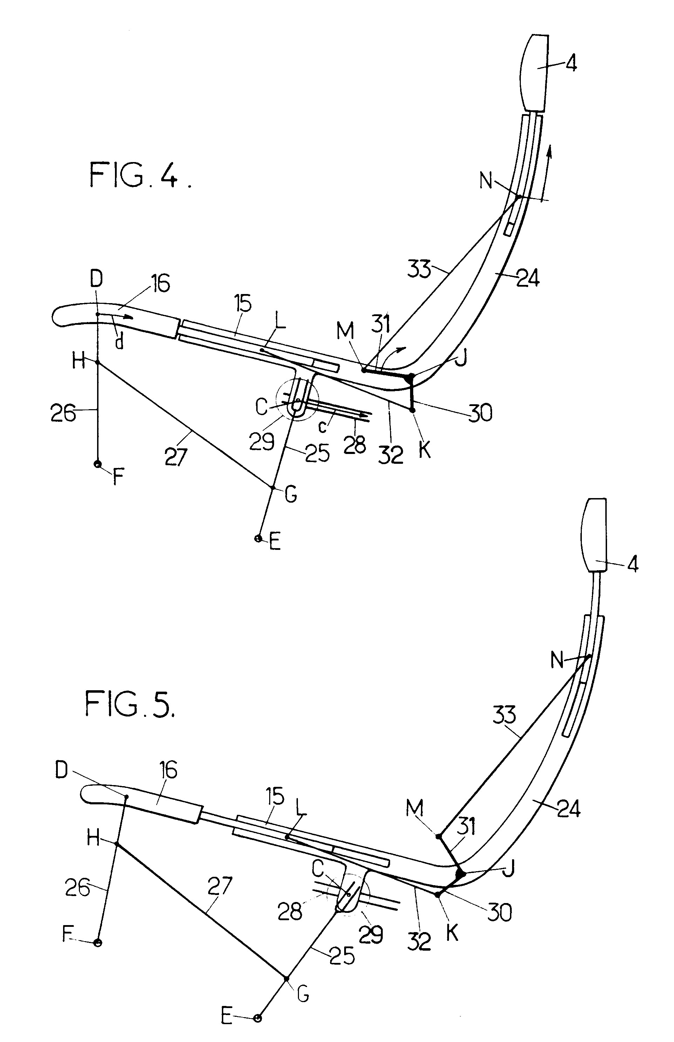

Dans le mode de réalisation schématisé sur les figures 4 et 5, les mécanismes à vis 18, 19 et écrous 22,23 précédemment décrits sont remplacés par des mécanismes à bielles.

Sur ces figures, l'ossature principale du siège 1 constitue la portion basse 24 du dossier et la portion arrière 15 de l'assise.

La portion avant 16 de l'assise est montée de façon horizontalement coulissante sur l'extrémité avant de cette ossature et la portion haute 4 du dossier, comprenant l'appui-tête, est montée de façon verticalement coulissante sur la portion arrière supérieure de ladite ossature.

Pour simplifier, on considérera dans la suite une simple projection transversale du mécanisme d'embiellage sur le plan du dessin, avec des bielles uniques, mais dans la pratique, certaines au moins de ces bielles sont avantageusement constituées par des ensembles de deux bielles parallèles disposées des deux côtés du siège et réunies rigidement entre elles.

Les points C et D liés respectivement à la portion arrière et à la portion avant de l'assise correspondent à deux premiers axes horizontaux transversaux disposés respectivement aux extrémités supérieures de deux bielles rigides 25, 26 elles-mêmes montées pivotantes à leurs extrémités inférieures sur des troisième et quatrième axes transversaux horizontaux E et F liés à l'embase 38 du siège.

Pour la position du siège visible sur la figure 4 et correspondant au réglage "taille minimum", la première bielle 25 est légèrement inclinée sur la verticale et vers l'arrière et l'autre bielle 26 est sensiblement verticale.

Ces deux bielles sont reliées entre elles par une entretoise rigide 27 montée pivotante sur elles autour respectivement d'un cinquième axe horizontal transversal G disposé relativement près de l'axe E et d'un sixième axe horizontal transversal H disposé relativement près de l'axe supérieur D.

En outre la liaison entre l'axe C et l'extrémité supérieure de la bielle 25 est assurée de façon telle qu'un coulissement relatif soit rendu possible le long de ladite bielle 25, dont l'extrémité supérieure se termine par exemple à cet effet à la façon d'une fourche à dents parallèles.

Enfin l'axe C est monté de façon à pouvoir coulisser le long d'un guide 28 rectiligne légèrement incliné sur l'horizontale et descendant vers l'arrière.

C'est ici la position de cet axe C le long du guide 28 qui peut être bloquée ou réglée au gré de l'usager du siège à l'aide d'un organe de commande qui est schématisé par la poignée 29.

Le fonctionnement du mécanisme qui vient d'être décrit est le suivant.

La figure 4 correspond à l'état du siège 1 correspondant au support des usagers B les plus petits : la bielle 26 est alors sensiblement verticale, la bielle 25 étant légèrement inclinée sur la verticale vers l'arrière et l'axe C se trouve à l'extrémité avant de son guide 28.

Les flèches sur la figure 4 montrent les déplacements susceptibles d'être imposés aux différents points du mécanisme pour adapter le siège au support d'usagers de plus en plus grands et la figure 5 montre l'état du siège à la moitié des courses de réglage.

Pour régler le siège à partir de son état représenté à la figure 4, il suffit à l'usager assis sur ce siège de débloquer l'axe C à l'aide de l'organe 29, puis de déplacer cet axe vers l'arrière le long du guide 28.

Si, comme précédemment, l'on appelle $\underline{m}$ la course de cet axe C, ladite commande a pour effet de déplacer d'une course de l'ordre de m/2 l'axe avant D vers l'arrière et d'une course m l'axe arrière C, vers l'arrière également et un peu vers le bas, selon une trajectoire parallèle au guide 28.

Cette différence entre les courses des deux axes C et D est obtenue automatiquement en raison de la présence de l'entretoise 27 entre les deux bielles 25 et 26, laquelle impose à l'ensemble une déformation en faux parallèlogramme avec des courses différentes pour les deux axes mobiles C et D.

C'est en outre le montage verticalement coulissant de l'axe C sur la bielle 25 qui rend possible sa translation rectiligne le long du guide 28, malgré le montage rotatif de ladite bielle 25 autour de l'axe fixe inférieur E.

En conclusion, le déplacement commandé de l'axe C assure simultanément :

- un recul relativement important du fond du siège avec un léger abaissement de ce fond dû à l'inclinaison du guide 28,
- et un allongement de l'assise avec, simultanément, un léger recul de son bord avant.

Il est à noter également que l'abaissement relatif du fond du siège par rapport à l'axe avant D se traduit par une légère élévation du bord avant de l'assise et surtout par une légère inclinaison du dossier vers l'arrière : le siège considéré se comporte donc comme si son dossier était articulé autour d'un axe inférieur, tout en ne comprenant pas de mécanisme d'articulation du type habituel. Bien entendu, cette observation relative à l'inclinaison du dossier est tout à fait applicable également au mode de réalisation à vis décrit ci-dessus.

Le siège est ainsi bien adapté au support d'un usager de taille moyenne.

A la fin de la course de réglage de l'axe C, l'usager bloque à nouveau cet axe en la position qu'il occupe alors par rapport au guide 28 à l'aide de l'organe 29.

Au lieu de commander ce blocage, l'usager peut parfaitement poursuivre la commande qui vient d'être décrite, ce qui continue les déformations et déplacements précédemment décrits de façon à adapter le siège au support d'un usager de grande taille.

Le mode de réalisation illustré sur les figures 4 et 5 est perfectionné de façon à assurer en même temps que les réglages précédents un réglage en hauteur de la portion haute 4 du dossier.

Selon ce perfectionnement, un levier coudé sensiblement à angle droit, comprenant deux bras 30,31, est monté pivotant autour d'un septième axe transversal horizontal J lié à l'ossature 15,24 du siège, l'extrémité K de l'un des bras 30 de ce levier est attelée par une biellette sensiblement horizontale 32 à un point L de la portion avant de l'assise et l'extrémité M de l'autre bras 31 dudit levier est attelée par une biellette sensiblement verticale 33 à un point N de la portion haute du dossier.

Le levier coudé 30,31 est orienté de façon telle que, pour l'état initial du siège correspondant au support d'un usager de petite taille, son bras 30 soit sensiblement vertical et son bras 31 s'étende vers l'avant.

On voit que les déplacements longitudinaux relatifs du point L de la portion avant 16 de l'assise par rapport à sa portion arrière 15 sont transformés en déplacements sensiblement verticaux du point N lié à la portion haute 4 du dossier.

Le rapport entre les amplitudes de ces deux déplacements, facilement réglable en jouant sur les longueurs des différents bras de levier du mécanisme, est prévu de façon telle que la course verticale de la portion haute 4 du dossier soit sensiblement égale à la course horizontale de la portion arrière 15 de l'assise.

On notera que, dans le mécanisme à bielles décrit ci-dessus, le poids du siège est transmis à son embase par les axes C et D, la bielle 26 et la glissière 28.

Ces pièces et les montages pivotants correspondants doivent donc être prévus suffisamment résistants, en particulier à la compression verticale, pour assurer la transmission des efforts correspondants, quelle que soit l'inclinaison des bielles.

Des moyens appropriés, tels qu'un ressort compensateur, pourront être ajoutés entre l'assise et son embase pour prendre au moins en partie en charge les efforts considérés.

A titre purement indicatif et bien entendu aucunement limitatif de l'invention :

- l'inclinaison sur l'horizontale de la trajectoire sensiblement rectiligne c imposée au déplacement de l'axe C lié à la portion arrière de l'assise est de préférence de l'ordre de 20°, étant généralement comprise entre 10 et 30°,
- la course du déplacement de cet axe C le long de se trajectoire -à laquelle est de préférence égale la course de déplacement de la portion haute 4 du dossier-, est de l'ordre de 150 mm,
- la course vers l'arrière, en valeur absolue, de l'axe D lié à la portion avant de l'assise, est de l'ordre de deux fois plus petite que celle de l'axe C, le rapport R entre ces deux courses étant de préférence de l'ordre de 2 et généralement compris entre 1,5 et 2,5.

Bien entendu, le mode de conversion décrit ci-dessus des déplacements relatifs des deux portions de l'assise en déplacements verticaux de la portion haute du dossier, mode mettant en oeuvre au moins une vis sans fin à commande réversible, peut parfaitement être associé au mécanisme à bielles 25 et 26.

L'allongement de l'assise 17, dû au coulissement relatif de sa portion avant 16 vers l'avant par rapport à sa portion arrière 15, crée un vide entre ces deux portions.

Ce vide a été désigné par la référence 34 sur les figures 6 et 7.

Sur la figure 6, la portion avant 16 de l'assise -qui est supposée comprendre non seulement un coussin central, mais aussi deux rebords 37 appelés souvent "ailes de mouette" et s'étendant sur toute la longueur de l'assise-, est représentée respectivement en traits pleins pour sa position moyenne, en traits interrompus pour sa position arrière correspondant au support des conducteurs de grande taille et en traits mixtes pour sa position avant correspondant au support des conducteurs de petite taille.

Selon une disposition avantageuse, on obture supérieurement le vide 34 par un voile souple 35 qui est tendu horizontalement entre les faces supérieures des deux coussins constitutifs des deux portions de l'assise lorsque la portion avant se trouve en sa position d'avance maximum.

Des moyens sont prévus pour solliciter ce voile vers le bas pour les autres positions de ladite portion avant, moyens constitués notamment par un enrouleur approprié, ou encore, comme illustré sur la figure 7, par au moins un ressort hélicoïdal de tension 36, s'étendant verticalement entre la zone médiane du voile 35 et un point d'ancrage inférieur faisant partie de l'ossature de l'assise.

Une disposition analogue peut être prévue pour garnir le vide qui se crée entre les deux portions constitutives du dossier du siège, lors de la sortie de sa portion haute 4 vers le haut.

En suite de quoi, et quel que soit le mode de réalisation adopté, on dispose finalement d'un siège réglable dont la constitution et la mise en oeuvre résultent suffisamment de ce qui précède.

Ce siège présente de nombreux avantages par rapport à ceux antérieurement connus, notamment celui de pouvoir s'adapter au support de conducteurs de toutes tailles déssirables moyennant l'actionnement très simple d'un organe de commande unique.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, pourvu qu'elles rentrent dans le cadre de la protection conférée par les revendications, notamment:

- celles où le recul de la portion avant 16 de l'assise serait associé à une légère élévation de cette portion, la trajectoire de l'axe D étant alors légèrement ascendante vers l'arrière au lieu d'être horizontale ou même légèrement descendante,
- celles où le niveau de l'un au moins des axes d'articulation G et H de l'entretoise 27 sur les bielles 25 et 26 serait réglable, de façon à régler le rapport entre les courses horizontales des deux axes C et D,
- et celles où le montage de l'axe arrière C de la portion arrière 15 de l'assise sur la bielle 25 serait prévu simplement pivotant et non verticalement coulissant, solution qui, par rapport à la précédente, simplifierait le montage et se traduirait par des déplacements verticaux plus accentués de ladite portion arrière, mai exigerait un renforcement de la bielle 25.

**Revendications**

1.  Siège avant de véhicule automobile, dont l'assise comprend une portion arrière (15) et une portion avant (16) montées de façon coulissante l'une sur l'autre selon la direction longitudinale du siège, et un mécanisme de réglage de leurs positions relatives actionnable par un organe de commande (29), caractérisé en ce que ledit organe de commande (29) est unique, en ce que la portion arrière (15) et la portion avant (16) sont montées pivotantes respectivement autour de deux axes horizontaux transversaux (C,D) portés par l'embase de siège (38) et en ce que le mécanisme de réglage est propre à modifier à la fois la position longitudinale de l'axe avant (D), la position longitudinale de l'axe arrière (C) et la hauteur de cet axe arrière (C) de façon telle que tout recul de la portion avant corresponde à un allongement de l'assise (17) et à un abaissement de sa portion arrière, et inversement.

2.  Siège selon la revendication 1, caractérisé en ce que le mécanisme de réglage est agencé de façon telle que l'axe arrière (C) puisse se déplacer le long d'un premier chemin fixe (c) rectiligne ou sensiblement rectiligne, légèrement incliné sur l'horizontale et descendant vers l'arrière et que l'axe avant (D) puisse se déplacer le long d'un second chemin fixe (d) rectiligne ou sensiblement rectiligne et horizontal ou sensiblement horizontal, avec un rapport fixe R compris entre 1,5 et 2,5 entre les courses de déplacement de ces deux axes.

3.  Siège selon la revendication 2, caractérisé en ce que l'angle formé entre les deux chemins est compris entre 10 et 30°.

4.  Siège selon l'une quelconque des revendications 2 et 3, caractérisé en ce que l'axe arrière (C) est lié à un écrou (22) coopérant avec une première vis (18) liée à l'embase (38) du siège et s'étendant selon le premier chemin fixe (c), en ce que l'axe avant (D) est lié à un écrou (23) coopérant avec une second vis (19) liée à l'embase (38) du siège et s'étendant selon le second chemin fixe (d) et en ce que les rotations de la première vis sont liées à celles de la second de façon telle que le rapport entre les courses de déplacement des deux écrous le long de leurs vis soit égal à R.

**5.** Siège selon la revendication 4, caractérisé en ce que le rapport entre les pas des deux vis (18, 19) est égal à R et en ce que les rotations de ces vis sont synchronisées par coopération de deux engrenages tronconiques (20,21) solidaires respectivement de celles-ci.

**6.** Siège selon la revendication 2, caractérisé en ce que les deux axes (C,D) sur lesquels sont montées pivotantes respectivement les portions arrière (15) et avant (16) de l'assise sont portés par les extrémités supérieures de deux bielles rigides (25,26) dont la première (25) est plus inclinée sur la verticale que la seconde (26) et dont les deux extrémités inférieures sont montées pivotantes autour de deux axes horizontaux transversaux fixes (E,F) de l'embase du siège, et en ce que les deux bielles sont réunies entre elles par une entretoise rigide (27) montée pivotante sur elles autour d'un cinquième axe (G) et d'un sixième axe (H) horizontaux transversaux, le cinquième axe (G), lié à la bielle arrière, étant relativement proche de l'extrémité inférieure de cette bielle alors que le sixième axe (H), lié à la bielle avant, est relativement proche de l'extrémité supérieure de cette bielle.

**7.** Siège selon la revendication 6, caractérisé en ce que le montage pivotant du premier axe (C) sur la bielle arrière (25) est prévu de façon à rendre possible un coulissement de cet axe parallèlement à lui-même le long de cette bielle, en ce que ledit axe (C) est lui-même monté de façon à pouvoir coulisser parallèlement à lui-même le long d'un guide fixe (28) incliné sur l'horizontale et définissant le premier chemin (c) ci-dessus et en ce que l'organe de commande unique (29) est agencé de façon à régler la position de cet axe le long de son guide.

**8.** Siège selon l'une quelconque des précédentes revendications, caractérisé en ce que la portion haute (4) du dossier, comprenant l'appui-tête, est montée verticalement coulissante dans la portion basse de ce dossier et en ce que le mécanisme de réglage est agencé de façon telle que sa commande unique modifie en outre le niveau de ladite portion haute du dossier dans un sens ascendant lors de l'allongement de l'assise et inversement.

**9.** Siège selon la revendication 8, caractérisé en ce que le déplacement vertical de la portion haute (4) du dossier est obtenu par rotation d'une vis sans fin montée rotative dans le dossier (24) et liée axialement à ce dossier, vis coopérant avec un écrou solidaire de ladite portion haute, ladite vis étant synchronisée avec une autre vis sans fin montée rotative dans la portion arrière (15) de l'assise et liée axialement à celle-ci, vis coopérant de façon réversible avec un écrou solidaire de la portion avant (16) de l'assise.

**10.** Siège selon la revendication 8, caractérisé en ce qu'un levier coudé (30,31) est monté pivotant autour d'un septième axe horizontal transversal (J) lié à la portion arrière de l'assise, en ce que l'extrémité de l'un des bras (30) de ce levier est attelée par une biellette sensiblement horizontale (32) à la portion avant (16) de l'assise et en ce que l'extrémité de l'autre bras (31) dudit levier est attelée par une biellette sensiblement verticale (33) à la portion haute (4) du dossier.

**11.** Siège selon l'une quelconque des précédentes revendications, caractérisé en ce que le vide (34) dégagé par l'écartement relatif des deux portions constitutives de l'assise ou du dossier est obturé extérieurement par un voile souple (35) qui est tendu en permanence vers l'intérieur du siège par des moyens élastiques appropriés (36).

**Claims**

**1.** Front seat for a motor vehicle, the sitting portion of which has a rear part (15) and a front part (16) mounted for sliding horizontally one on the other in the longitudinal direction of the seat and an adjustment mechanism of their relative positions actuatable by a control member (29), characterized in that said control member is single, in that the rear part (15) and the front part (16) are mounted for pivoting respectively on two horizontal transverse shafts (C, D) carried by the base of the seat (38) and in that the adjustment mechanism is adapted for modifying both the longitudinal position of the front part (D), the longitudinal position of the rear part (C) and the level of this rear part (C) so that any backward movement of the front part corresponds to lengthening of the sitting portion (17) and lowering of its rear part, and conversely.

**2.** Seat according to claim 1, characterized in that the adjustment mechanism is arranged so that the rear shaft (C) may move along a first fixed rectilinear or substantially rectilinear path (c), inclined slightly with respect to the horizontal and descending towards the rear and so that the front shaft (D) may move along a second fixed rectilinear or substantially rectilinear and horizontal or substantially horizontal path (d), with a fixed ratio R between 1.5 and 2.5 between the travel distances of these two shafts.

3. Seat according to claim 2, characterized in that the angle formed between the two paths is between 10 and 30°.

4. Seat according to any one of claims 2 and 3, characterized in that the rear shaft (C) is connected to a nut (22) cooperating with a first screw (18) connected to the base (38) of the seat and extending along the first fixed path (c), in that the front shaft (D) is connected to a nut (23) cooperating with a second screw (19) along the second fixed path (d) and in that rotation of the first screw is tied up with that of the second so that the ratio between the travel distances of the two nuts along their screws is equal to R.

5. Seat according to claim 4, characterized in that the ratio between the pitches of the two screws (18, 19) is equal to R and in that rotation of these screws is synchronized by cooperation of two truncated cone shaped gears (20, 21) fixed respectively thereto.

6. Seat according to claim 2, characterized in that the two shafts (C, D) on which the front (16) and rear (15) parts of the sitting portion are mounted respectively for pivoting are carried by the upper ends of two rigid links (25, 26) the first of which (25) is more inclined with respect to the vertical than the second one (26) and the two lower ends of which are mounted for pivoting about two fixed transverse horizontal shafts (E, F) of the base of the seat, and in that the two links are joined together by a rigid tie (27) mounted for pivoting thereon about a fifth (G) and sixth (H) transverse horizontal shafts, the fifth shaft (G), connected to the rear link, being relatively close to the lower end of this link whereas the sixth shaft (H), connected to the front link, is relatively close to the upper end of this link.

7. Seat according to claim 6, characterized in that the pivoting mounting of the first shaft (C) on the rear link (25) is provided so as to make sliding of this shaft possible parallel to itself along this link, in that said shaft (C) is itself mounted so as to be able to slide parallel to itself along a fixed guide (28) inclined with respect to the horizontal and defining the first above path (c), and in that the single control member (29) is adapted for adjusting the position of this shaft along its guide.

8. Seat according to any one of the preceding claims, characterized in that the top portion (4) of the seat-back, comprising the head-rest, is mounted for vertical sliding in the low portion of this seat-back and in that the adjustment mechanism is adapted so that its single control further modifies the level of said top portion of the seat-back in a rising direction during lengthening of the sitting portion and conversely.

9. Seat according to claim 8, characterized in that the vertical movement of the top portion (4) of the seat-back is obtained by rotation of an endless screw rotatably mounted in the seat-back (24) and connected axially to this seat-back, which screw cooperates with a nut fast with said top portion, said screw being synchronized with another endless screw mounted for rotation in the rear part (15) of the sitting portion and connected axially thereto, which screw cooperates reversibly with a nut fast with the front part (16) of the sitting portion.

10. Seat according to claim 8, characterized in that a crank lever (30, 31) is mounted for pivoting about a seventh transverse horizontal shaft (J) connected to the rear part of the sitting portion, in that the end of one of the arms (30) of this lever is coupled by a substantially horizontal link (32) to the front part (16) of the sitting portion and in that the end of the other arm (31) of said lever is coupled by a substantially vertical link (33) to the top portion (4) of the seat-back.

11. Seat according to any one of the preceding claims, characterized in that the space (34) freed by relative movement apart of the two parts forming the sitting portion or the seat-back is closed externally by a flexible web (35) which is permanently stretched towards the inside of the seat by appropriate resilient means (36).

**Patentansprüche**

1. Vordersitz für ein Kraftfahrzeug dessen Sitzteil aus einem hinteren Teil (15) und einem vorderen Teil (16), die in Längsrichtung des Sitzes aneinander verschiebbar befestigt sind, und einem Verstellmechanismus zum Einregulieren ihrer Stellungen zueinander besteht, der mittels eines Stellorgans (29) betätigbar ist, dadurch gekennzeichnet, daß nur ein Stellorgan (29) vorhanden ist, daß der hintere Teil (15) und der vordere Teil (16) jeweils schwenkbar um zwei horizontale, querverlaufende Achsen (C, D) befestigt sind, die an dem Gestell (38) des Sitzes gehalten sind, und daß der Verstellmechanismus so ausgebildet ist, daß gleichzeitig die Stellung der vorderen Achse (D) in Längsrichtung, die Stellung der hinteren Achse (C) in Längsrichtung und die Höhe dieser hinteren Achse (C) veränderbar sind, derart, daß jedes Zurückschieben des vorderen Teils einer Verlängerung des Sitzteils (17) und einer Absenkung seines hinteren Teils entspricht und umgekehrt.

2. Vordersitz nach Anspruch 1, dadurch gekennzeichnet, daß der Verstellmechanismus so ausgebildet ist, daß die hintere Achse (C) sich längs einer ersten festen, geradlinigen oder annähernd geradlinigen Bahn (c), die leicht geneigt zur Horizontalen verläuft und sich nach hinten absenkt, verschieben kann und daß die vordere Achse (D) sich längs einer zweiten festen, geradlinigen oder annähernd geradlinigen und horizontalen oder annähernd horizontalen Bahn (d) bei einem festen, zwischen 1,5 und 2,5 liegenden Verhältnis R zwischen den Verschiebungsbahnen der beiden Achsen verschieben kann.

3. Vordersitz nach Anspruch 2, dadurch gekennzeichnet, daß der zwischen den beiden Bahnen gebildete Winkel zwischen 10 und 30° liegt.

4. Vordersitz nach einem der vorhergehenden Ansprüche 2 und 3, dadurch gekennzeichnet, daß die hintere Achse (C) mit einer Mutter (22) verbunden ist, die mit einer ersten Schraube (18) zusammenwirkt, die mit dem Gestell (38) des Sitzes verbunden ist und sich längs der ersten festen Bahn (c) erstreckt, daß die vordere Achse (D) mit einer Mutter (23) verbunden ist, die mit einer zweiten Schraube (19) zusammenwirkt, die mit dem Gestell (38) des Sitzes verbunden ist und sich längs der zweiten festen Bahn (d) erstreckt, und daß die Drehbewegungen der ersten Schraube mit denen der zweiten Schraube so verbunden sind, daß das Verhältnis zwischen den Verschiebungsbahnen der beiden Muttern längs ihrer Schrauben gleich R ist.

5. Vordersitz nach Anspruch 4, dadurch gekennzeichnet, daß das Verhältnis zwischen den Wegen der beiden Schrauben (18, 19) gleich R ist und daß die Drehbewegungen dieser Schrauben durch Zusammenwirken von zwei konischen Getrieben (20, 21) synchronisiert sind, die jeweils an diesen befestigt sind.

6. Vordersitz nach Anspruch 2, dadurch gekennzeichnet, daß die beiden Achsen (C, D), an denen jeweils der hintere Abschnitt (15) und der vordere Abschnitt (16) des Sitzteiles schwenkbar befestigt sind, durch die oberen Enden von zwei starren Zwischengliedern (25, 26) gehalten werden, von denen das erste Glied (25) mehr zur Senkrechten geneigt ist als das zweite Glied (26) und deren beide untere Enden um zwei feste, waagerecht quer verlaufende Achsen (E, F) des Sitzgestelles schwenkbar sind, und daß die beiden Zwischenglieder über einen starren Verbindungssteg miteinander verbunden sind, der schwenkbar an diesen um eine fünfte Achse (G) und eine sechste Achse (H), die horizontal und quer verlaufen, befestigt ist, wobei die fünfte Achse (G), die mit dem hinteren Zwischenglied verbunden ist, relativ nah am unteren Ende dieser Stange sitzt, während die sechste Achse (H), die mit dem vorderen Zwischenglied verbunden ist, relativ nah an dem oberen Ende dieses Zwischengliedes angeordnet ist.

7. Vordersitz nach Anspruch 6, dadurch gekennzeichnet, daß die schwenkbare Anbringung der ersten Achse (C) an dem hinteren Zwischenglied (25) so erfolgt, daß sich diese Achse parallel zu sich selbst längs dieses Zwischengliedes verschieben kann, daß die Achse (C) ihrerseits so befestigt ist, daß sie sich parallel zu sich selbst längs einer festen Führung (28) verschieben kann, die zur Horizontalen geneigt ist und die erste Verschiebungsbahn (c) bildet, und daß das einzige Steuerorgan (29) so betätigt wird, daß es die Stellung dieser Achse längs ihrer Verschiebungsbahn einstellt.

8. Vordersitz nach einem der vorhergehenden Ansprüche, dadurch gekennzeichnet, daß der obere Abschnitt (4) der Rückenlehne, der die Kopfstütze trägt, senkrecht verschiebbar in dem unteren Abschnitt der Rückenlehne angebracht ist, und daß der Verstellmechanismus so ausgebildet ist, daß seine einzige Betätigung darüber hinaus die Höhenlage des oberen Abschnittes der Rückenlehne so verändert, daß sie ansteigt, wenn der Sitzteil verlängert wird und umgekehrt.

9. Vordersitz nach Anspruch 8, dadurch gekennzeichnet, daß die senkrechte Verschiebung des oberen Abschnittes (4) der Rückenlehne durch Drehen einer Schnecke erfolgt, die drehbar in der Rückenlehne (24) angebracht und axial mit dieser Rückenlehne verbunden ist, wobei die Schnecke mit einer an dem oberen Abschnitt angebrachten Mutter zusammenwirkt, die Schnecke mit einer anderen Schnecke synchronisiert ist die drehbar in dem hinteren Abschnitt (15) des Sitzteiles befestigt und axial mit dieser verbunden ist, und die Schnecke reversibel mit einer Mutter zusammenwirkt, die am vorderen Abschnitt (16) des Sitzteiles befestigt ist.

10. Vordersitz nach Anspruch 8, dadurch gekennzeichnet, daß ein gebogener Hebel (30, 31) schwenkbar um eine siebte horizontale, quer verlaufende Achse (J) befestigt ist, die mit dem hinteren Abschnitt des Sitzteiles verbunden ist, daß das Ende des einen Armes (30) dieses Hebels mittels eines im wesentlichen waagerechten Gestänges (32) an den vorderen Abschnitt (16) des Sitzteiles und daß das Ende des anderen Armes (31) des Hebels über ein im wesentlichen senkrecht verlaufendes Gestänge (33) an den oberen Abschnitt (4) der Rückenlehne angekuppelt ist.

11. Vordersitz nach einem der vorhergehenden Ansprüche, dadurch gekennzeichnet, daß der nicht ausgefüllte Raum (34), der durch den Abstand zwischen den beiden den Sitz oder die Rückenlehne bildenden Abschnitten freiliegt nach außen zu durch eine nachgiebige Abdeckung (35) abgedeckt ist, die dauernd durch geeignete elastische Mittel (36) nach innen gezogen wird.

FIG.1.

FIG.2.

EP 0 429 350 B1

EP 0 429 350 B1

FIG.3.

FIG.6.

FIG.7.

13

FIG.4.

FIG.5.